(19) Europäisches Patentamt / European Patent Office / Office européen des brevets

(11) **EP 2 782 053 A1**

(12) **EUROPEAN PATENT APPLICATION**

(43) Date of publication:
24.09.2014 Bulletin 2014/39

(51) Int Cl.:
*G06Q 10/04* (2012.01)   *G06Q 50/30* (2012.01)

(21) Application number: 14159572.8

(22) Date of filing: 13.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 19.03.2013 US 201313847172

(71) Applicant: Xerox Corporation
Rochester, New York 14644 (US)

(72) Inventor: Chidlovskii, Boris
38240 Meylan (FR)

(74) Representative: Skone James, Robert Edmund
Gill Jennings & Every LLP
The Broadgate Tower
20 Primrose Street
London EC2A 2ES (GB)

(54) **Temporal series alignment for matching real trips to schedules in public transportation systems**

(57) Methods and systems for matching real trips to schedules in a public transportation system. Inputs can be reduced to a two-dimensional sequence alignment of data indicative of a temporal series of arrival and departure timestamps (74). A dynamic programming solution is applied to the two-dimensional sequence alignment of the data (78). Then, symmetric and asymmetric cases are analyzed with respect to the two-dimensional sequence alignment of the data to thereby match real trip data to schedule data in the public transportation system based on the temporal series of the arrival and departure timestamps (82).

FIG. 1

**Description**

FIELD OF THE INVENTION

Embodiments are generally related to public transportation systems and techniques for optimizing ridership and scheduling. Embodiments are also related to two-dimensional sequence alignment techniques and dynamic programming.

BACKGROUND

To make public transportation services more attractive for citizens and also to reduce car usage, cities as well as public transportation companies and organzations need to ensure a high quality of public transportation services including frequency, regularity, and reliability.

Transit service reliability is the ability of the transit system to adhere to a schedule or maintain regular headways and a consistent travel time. More generally, reliability relates to an uncertainty in the time taken to travel from the start to the end of a person's journey. For a public transport journey, reliability can affect users in one of two ways: as a delay when picking up the passenger and as a delay when the passenger is on the service. One or both of these sources of unreliability causes passengers to arrive at their destination at a different time than scheduled. Reliability is important for both operators and passengers. Unreliable services cause difficulties in timetabling and resource planning. Also, unreliable services are typically more unevenly loaded causing the passenger overload.

Schedule adherence positions all bus ridership with respect to the schedules; the availability of this information is crucial to analyze the quality of service and its reliability. We cope with the case when both information on bus ridership and schedules is available but no correspondence is established. Reasons why bus trips and schedules are available but not the assignment are several. In most cases, they come from different sources. Schedules are known in advance for one or multiple service seasons while bus ridership is collected by vehicle tracking systems on a daily basis. The correspondence is manually established by the operator and therefore is a subject of multiple omissions or errors.

Thus, two general areas of interest in public transportation systems to focus on for enhancing such services include bus ridership and schedules. A reliable corrspondence between these areas has not yet been established. In particular, a problem arises in determining optimal correspondence between real bus trips and schedules. To date, this ambiguity has not been addressed. It is believed that further analysis and optimization regarding ridership and schedules can result in a much more efficient approach to implementing public transportation systems, particularly when dealing with a variety of different types of traffic delays, missed trips, multiple different services on the same line, additional services, etc.

SUMMARY

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.

It is, therefore, an aspect of the disclosed embodiments to provide a method and system for optimizing ridership and scheduling in a public transportation system.

It is yet another aspect of the disclosed embodiments to provide for two-dimensional sequence alignment techniques and dynamic programming solutions.

The aforementioned aspects and other objectives and advantages can now be achieved as described herein. Methods and systems are disclosed for matching real trips to schedules in a public transportation system. Inputs are reduced to a two-dimensional sequence alignment of data indicative of a temporal series of arrival and departure timestamps. A dynamic programming solution is applied to the two-dimensional sequence alignment of the data. Then, symmetric and asymmetric cases are analyzed with respect to the two-dimensional sequence alignment of the data to thereby match real trip data to schedule data in the public transportation system based on the temporal series of the arrival and departure timestamps.

BRIEF DESCRIPTION OF THE FIGURES

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.

FIG. 1 illustrates a graph depicting a real data example derived from the public transport system in Nancy, France, which can be considered for use in developing an embodiment;

FIG. 2 illustrates respective space-time diagrams for cases of important traffic delays (leg), combined with bus order change data (right), in accordance with an embodiment;

FIG. 3 illustrates a graph depicting an alignment example, in accordance with an embodiment;

FIG. 4 illustrates a sample matrix in accordance with an embodiment;

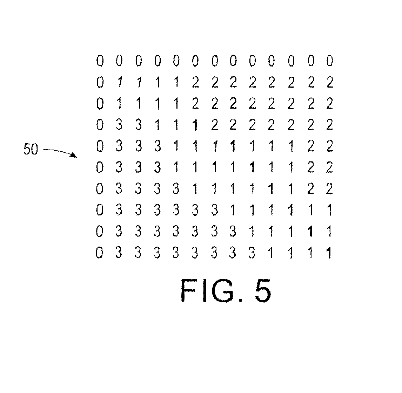

FIG. 5 illustrates another sample matrix in accordance with an embodiment;

FIG. 6 illustrates a map of the public transport network in Nancy, France, and a map of all existing services with respect to a particular transportation line;

FIG. 7 illustrates a high-level flow chart outlining logical operational steps of a method for temporal series alignment for matching real trip data to scheduling information in a public transportation system, in accordance with a preferred embodiment;

FIG. 8 illustrates a schematic view of a computer system, which can be implemented in accordance with one or more of the disclosed embodiments; and

FIG. 9 illustrates a schematic view of a software system including an anomaly detection module, an operating system, and a user interface, in accordance with the disclosed embodiments.

DETAILED DESCRIPTION

The problem of determining the optimal correspondence between real bus trips and schedules can be addressed according to the disclosed embodiments. The correspondence ambiguity particularly with multiple matching choices is possible by implementing a correct matching algorithm. With this task being the combinatorial optimization problem, an efficient matching algorithm can thus be implemented, as discussed herein. Schedules and real trips can be processed which, like any real traffic data, are subject to all kinds of traffic delays, missed trips, multiple types of service on the same line, additional services, etc.

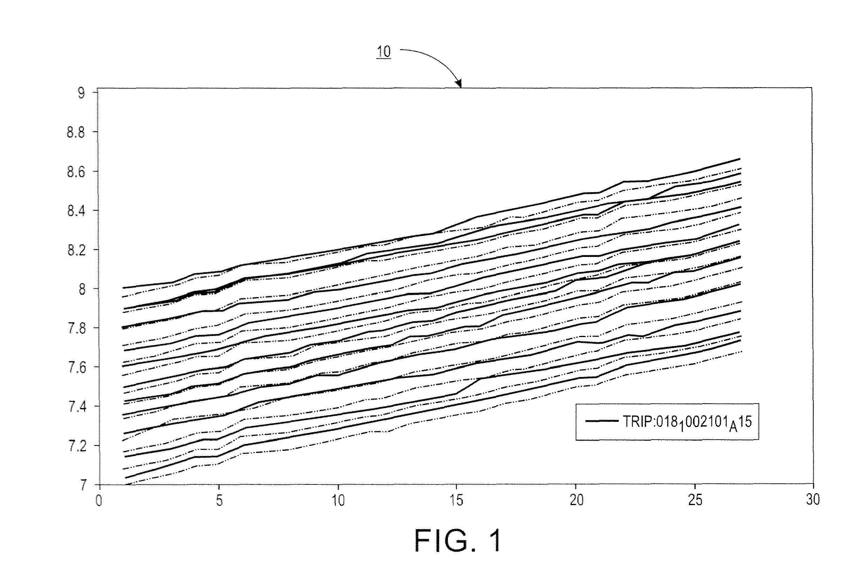

FIG. 1 illustrates a graph 10 depicting a real data example derived from the public transport system in Nancy, France. Graph 10 is based on deployed time-space diagrams to demonstrate the problem of assigning bus trips to schedules. Graph 10 generally indicates eleven bus trajectories (in blue) and 14 schedules (in red) referring to one hour of the service, from 7:00am to 8:00am, for a service with 27 stops. Such a time-space diagram is based on an abstraction from the exact geo-positioning, but preserves all information relevant to the bus ridership and schedules. FIG. 1 thus illustrates a rather simple case where close matches between trips and schedules can be easily identified.

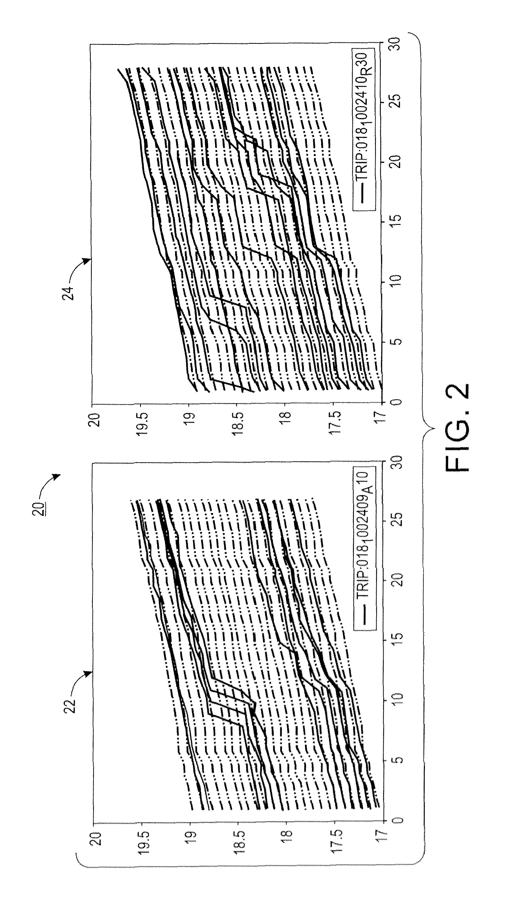

FIG. 2, on the other hand, illustrate graphs 22 and 24 that report more complex cases (e.g., the same service, data collected from 5:00pm to 7:00pm) where traffic incidents due to delays, technical problems, by-pass lanes, etc., make the assignment much more challenging. Graphs 22 and 24 are respective space-time diagrams for cases of important traffic delays (leg), combined with bus order change data (right).

Thus, to address issues such as that of the example data presented in FIGS. 1-2, a simple and computationally efficient method, system, and processor-readable medium is disclosed herein for matching real trips to schedules in a public transportation system, where both inputs can be represented by temporal series of arrival/departure timestamps. Such an approach reduces the problem to the 2-dimensional sequence alignment and implements a dynamic programming solution. Additionally, we consider several extensions of the basic method when the correspondences are partially available or multiple services overlap. Such an approach has been applied, for example, to a 3-month collection of bus ridership and timetable information for the Nancy, France public transportation system, as will be discussed with respect to some examples herein.

The problem can be defined as an assignment over two series of temporal sequences; real trips R and schedules C. Real trip series is defined as a set of n real trips $R=\{R_i, i=1,...,n\}$ where each trip $R_i$ is a pair $(S_i,T_i)$, where $S_i$ is a service type and $T_i$ is a timestamp sequence, $T_i=(t_{i1},..., t_{ik})$, of arrival or departure times for all stops served by $S_i$, according to the stop order.

Similarly, the schedule series C can be a set of m schedules $C=\{C_j, j=1,...,m\}$, where each schedule $C_j$ is a pair $(S_j,T_j)$, where $S_j$ is a service type and $T_j$ is a timestamp sequence, $T_j=(t_{j1},...,t_{jk})$, of arrival times for all stops served by $S_j$ in the increasing order. Any service type S is defined by a proper shape and a sequence of stops, $S=(s_1,,...,s_k)$.

The assignment refers to the task of finding a correspondence between trips $R_i$, i=1,...,n and schedules $C_j$, j=1,...,m. In its strict version, each real trip $R_i$ is assigned to one schedule $C_j$. The problem is asymmetric; all trips get assigned, while some schedules may remain unassigned to any trip, as in a large majority of real cases m>n. In an extended version of the problem, we make the problem symmetric by introducing a special label 'no assignment'. A real trip is assigned such a label when no correspondence found in the schedule series and it represents an extra service (out of schedule). Similarly, a schedule is labeled 'no assignment' with no correspondence found in the real trip series.

Two series R and C are assumed to refer to the same period of time, for example, one day, 24 hours, etc. In most cases, the assignment problem addresses a long period of time (months), but there often exists a way to decompose the full period into natural segments, for example, on the daily basis.

Any service line may have different types which vary in both shapes and time periods. They reflect the variety of traveler volume/density patterns and may refer to daily, weekly, weekend, vacations, etc., service types. Thus, the same shape may have different schedules for working days and vacation time periods, etc.

Each service type is given by a set of trip schedules, where a schedule is defined as a pair (S,T) where S is a service type defined by a sequence of stops, $S=(s_1,..., s_k)$. A real trip $R_i=(S_i,T_i)$ **matches** a schedule $C_j=(S_j,T_j)$ **by type** if $S_i = S_j$. In other words, the bus ridership service matches a schedule if it follows the schedule stop order.

One trip can be assigned to exactly one schedule in the asymmetric case and to zero or one schedule in the symmetric one. In either case, assigning real trips to schedules should minimize a global correspondence cost function. Therefore, the assignment is a combinatorial optimization problem with a prohibitive computational complexity of finding the optimal solution.

Thus we propose to convert the assignment problem into a 2-dimensional alignment one. We first convert sets of trips R and schedules C into sequences and then align them in a way the correspondence can be inferred from the final alignment. Unlike the conventional alignment of 2 sequences which are 1-dimensional entities, we align 2-dimensional sequences, which are sequences of timestamp sequences. In this 2-dimensional alignment framework, we develop a dynamic programming solution with the reasonable computational complexity providing the minimal cost alignment.

Several methods have been proposed for aligning multi-dimensional sequences most of which derive from 2-dimensional DNA sequences defined over a finite alphabet. Trips and schedules are not instances in a finite alphabet; they are actually 2-dimensional timestamp sequences. Thus we extend previously designed alphabet-based solutions to temporal sequences. We measure the similarity between a trip and a schedule by introducing a distance measure. The distance function we propose is a metric; it satisfies the positivity, symmetric, and triangle properties. Distance is 0 only and if only the two sequences coincide.

The outcome of 2-dimensional sequence alignment establishes links between the two sequences, with cases of matches and gaps, the latter being either insert or delete. The final sequence alignment reveals the global degree of similarity between a trip sequence and a schedule sequence, where the match cases can be interpreted as a trip/schedule correspondence and gap cases correspond to 'no assignment'.

All alignment methods assume the sequential nature of inputs. While schedules are ordered in the natural way, it is not always the case of trips. Real trips start off in a certain order, but after analysis of real datasets, their order can change due to different traffic incidents. Our proposal includes two components. First, we consider the alignment for a given order of real trips. For this task, we extend the Needleman-Wunsch algorithm previously designed for the alignment of bio-sequences to the alignment of temporal sequences. The second component copes with different options of ordering the real trips.

We process two sequences of real trips **R** =($R_i$,i=1,...,n) and of schedules **C** =($C_j$, j=1,...,m). The task is reduced to finding the optimum alignment between **R and C.** For a given real trip R in **R** and a given schedule C in **C,** we define a function of distance between them, DIST(R,C), provided they match by service type. **The distance** between a real trip R and a schedule C for a same service S is defined as follows

$$\text{Dist}_S(R,C) = \Sigma^k_{i=1}\, h_i\, |t^C_i - t^R_i| \qquad\qquad (1)$$

where $|t^C_i - t^R_i|$ is the difference between schedule timestamp $f^C_i$ and real trip timestamp $t^R_i$ at stop $s_i$ in service S, i=1,...,k, and $h_i$ is a special weighted function to reflect the importance of some timestamps where timestamps are either arrival or departure times.

We consider several weighting functions $h_i$ to ensure a proper treatment for different cases. In the most frequent case the equi-weight average, we set $h_i=1/k$ for all stops $s_i$, i=1,...,k.

In certain case (see Nancy screenshots), the first stop and/or last stop timestamps get polluted by factors which are irrelevant to the bus ridership and may include measurement errors. For such cases, we propose the 0-N-off equi-weight average by setting $h_1 = h_k = 0$, $h_i = 1/(k-2)$ for all i=2,...,k-1 which exclude the very first and very last stops from consideration.

The Needleman-Wunsch algorithm is an example of dynamic programming for performing a global alignment of two sequences, and its first application was in bioinformatics to align protein or nucleotide sequences. It performs a global alignment on two sequences where it copes with variable costs, where scores for aligned characters are specified by a matrix S(a, b) of similarity of characters a and b in a known alphabet. It uses a gap penalty value d for the insert and delete cases of the alignment.

We generalize the Needleman-Wunch algorithm from bio-sequences to series of temporal sequences. Characters are defined on an alphabet of known characters in an alphabet to sequences of temporal values. Scores for aligning elements are not provided by a similarity matrix but evaluated using a distance function.

As in other dynamic programming methods, we define size (n+1)x(m+1) matrix D, initiated with D(i,0)=0, i=1,...,n and D(0,j)=0,j=1,...,m. Then the recursive rule for finding an alignment of sequence $\boldsymbol{R}$=($R_i$, i=1,...,n) and sequence $\boldsymbol{C}$=($C_j$, j=1,...,m) is the following:

$$D(i,j) = \min \begin{cases} D(i-1,j-1) + DIST_{S_i=S_j}(R_i,C_j) & \text{//case 1:match} \\ D(i-1,j) + G_t & \text{//case 2: trip gap} \\ D(i,j-1) + G_s & \text{//case 3: schedule gap} \end{cases}$$

where $DIST(R_i,C_j)$ is a distance between the i-th element in the trip sequence $\boldsymbol{R}$ and the j-th element in the schedule sequence $\boldsymbol{C}$, provided the same service type $S_i=S_j$; $G_t$ and $G_s$ are the non-assignment trip/schedule costs. It generalizes the case of sequences over a given alphabet of symbols, with a predefined matrix of distances between elements, to a more general case where we calculate the distance function DIST for a given pair of elements $R_i$ and $C_j$. In the symmetric case, we set equal gap cost, $G_t=G_s$. In the asymmetric case, we may want to set different values $G_t$ and $G_s$ to accommodate the different costs of gap in schedules and real trips. In the non-symmetric case, the assignment for the trips given by the recursively constructed solution $D(\boldsymbol{R,C})$ should be interpreted in a proper way. The match case is interpreted as the assignment of trip $R_i$ to schedule $C_j$, insert case refers to no assignment for a schedule $C_j$, and delete case refers to the assign of the 'additional service' case.

As the algorithm progresses, the D(i,j) will be assigned to be the optimal score for the alignment of the first i=0,...,n elements in $\boldsymbol{R}$ and the first j=0,...,m elements in $\boldsymbol{C}$. Once the D matrix is computed, the entry D(n,m) gives the minimum score among all possible alignments. To compute an alignment that actually gives this score, we calculate matrix $I_D$ which tracks the choices made. Entry $I_D(i,j)$ is 1,2 or 3; it indicates which case was chosen by formula (2) for D(i,j). To obtain the alignment, we start from the bottom right cell of $I_D$ and retrieve the case it came from. If the case is 1 (match), then $R_i$ and $C_j$ are aligned, if 2(delete), then $R_i$ is aligned with a gap, and if 3(insert), then $C_j$ is aligned with a gap. In general, more than one choice may have the same value, leading to alternative optimal alignments.

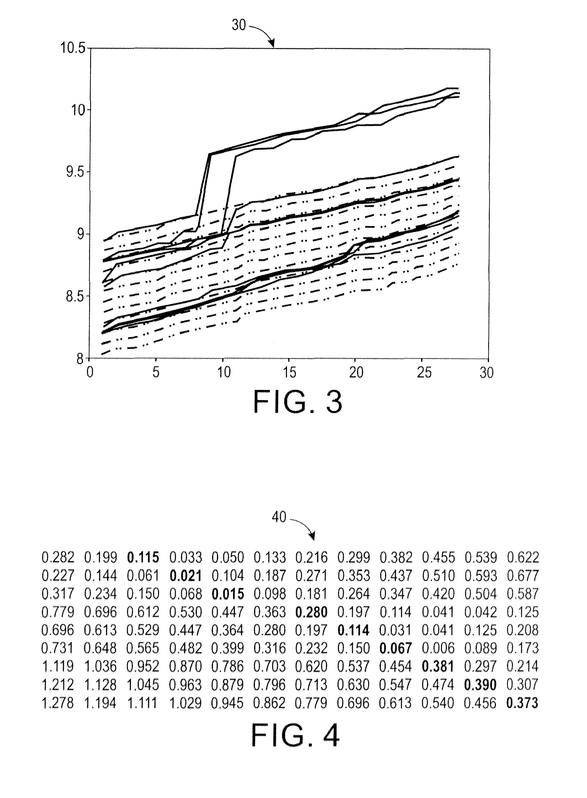

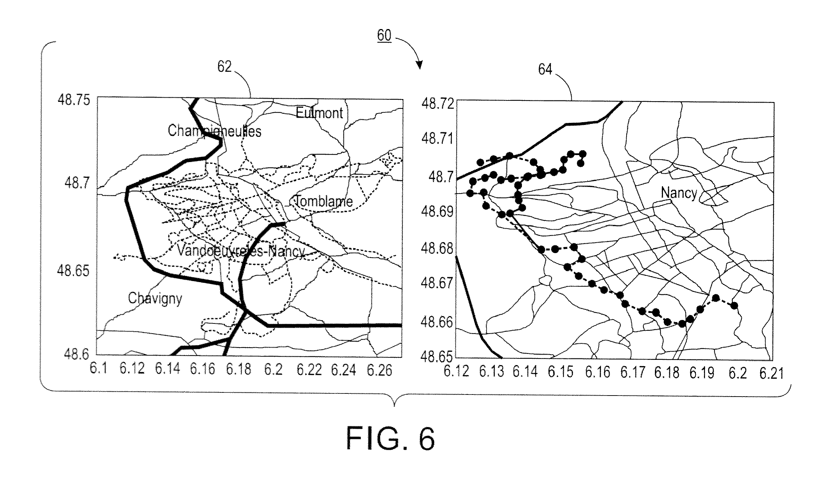

Consider the alignment example for the case reported in FIG. 3. The task copes with 9 real trips and 12 schedules. FIG. 4 reports the results of alignment, under the equi-average weight function H via matrix 40. The matrix 40 reports the full matrix of distances DIST, as well as the optimal assignment path where three schedules (1st,2nd and 6th) remained unassigned. Another matrix 50 (Matrix $I_D$) is shown in FIG. 6. Matrix $I_D$ reports the choice tracking as well as the optimal alignment path, where bold elements refer to the matches and italic refer to the gaps.

The algorithm discussed above assumed that the order in sequences $\boldsymbol{R}$ and $\boldsymbol{C}$ is given. The analysis of real data suggests that the order of real trips $R_i$ may be a subject of different changes due to traffic incidents. Here we consider several options for ordering real trips by introducing the reference time for trips. **Reference time** for a real trip R over a service S is defined as follows:

$$Dist_S(R,C)=\Sigma^r_{i=1} w_i t^R_i \qquad\qquad (2)$$

where $t^R_i$ is the real trip timestamp $t^R$ at stop $s_i$ in S and $W=(w_i)$ is a special weighted function to reflect the importance of some timestamps.

Some important choices of function W are as follows:

First stop: $w_1=1$ and $w_1=0$ for i=2,...,k; it reflects the bus departure order at the first stop.

Second stop: $w_2=1$ and $w_i=0$ for i=1,3,...,k; it reflects the bus passage order at the second stop;

Equal-average: $w_i=1$ for all for i=1,...,k; it reflects the average over the full ride;

1-N-off average: $w_1=0$, $w_r=0$, and $w_i=1$ for all for i=2,...,k-1; it reflects the average over the full ride except the first and the last stop timestamps which may be a source of errors.

All trips can be ordered by their reference time to obtain the sequence $\boldsymbol{R}$ used for the alignment algorithm. The alignment method described above addresses a basic case. We can consider, however, several extensions that cover different situations that may occur in the real datasets.

Assume that we are given a partial alignment of trips in **R** to schedules **C** in the form of I pairs $(R_i, C_j)$, I < min (n,m). To complete the alignment, there are two possible cases. In one case, the order is enforced, then the task is decomposed in I+1 subtasks $(\mathbf{R}_1, \mathbf{C}_1),...,(\mathbf{R}_{I+1}, \mathbf{C}_{I+1})$, which are then solved in the same manner using the same routine. In the second case, preserving the order is not required. Then the alignment is solved by removing I pairs $(R_i, C_j)$ from **R and C** and then aligning the remaining sequences **R'** and **C'**.

The alignment method described earlier assumed that trips and schedules match by the service type; it never tries to compare trips and schedules with different service types. In Nancy data, we observed multiple episodes of close match between trips and schedules of different service types. There may be different causes due to technical problems, traffic incidents, deployment procedures, etc.

We can generalize the distance function in (1) by considering different services and taking into account their common part in order to compare corresponding timestamps and also penalize segments where services mismatch. The distance between a real trip R on service $S_1$ with $k_1$ stops and a schedule C on service $S_2$ with $k_2$ stops is defined over their common set of stops $s_1,...,s_k$, where $k <= \min(k_1,k_2)$, as follows:

$$\text{Dist}_{Sj,Sj}(R,C) = \sum_{i=1}^{k} h_i\, |t^C_i - t^R_i| + \pi\, (k_1 + k_2 - 2k) \qquad (3)$$

where $|t^C_i - t^R_i|$ is the difference between schedule timestamp $t^C_i$ and real trip timestamp $t^R_i$ at common stop $s_i$, i=1,...,k, $h_i$ is a weighted function, and $\pi$ is a penalty cost for every stop mismatch between $S_1$ and $S_2$.

Note that the method discussed above treats the 2-dimensional alignment collapsed 2-dimensional data to the 1-dimensional sequences in order to be able to use the conventional algorithms. We are also interested in the truly 2-dimensional alignment.

FIG. 6 illustrates a map 62 of the public transport network in Nancy, France, and a map 64 of all existing services with respect to transportation line 11. The Nancy, France public transport collection covers the bus trips and schedule information collected over a period of 90 days collected in March to May 2012. In total, the collection includes real trip ids 184,339 real trips for 24 routes with 84 different services. The map of Nancy public transport network is presented in map 62. An example of a route in the network with 4 different services is shown in map 64.

Table 1 below summarizes results of the alignment for the Nancy data collection. For each of the routes, it reports the number of different services, the total number of trips, and the average distance of the alignment solution.

**Table 1. Alignment result summary.**

| Route | Number services | Number of real trips | Average distance |
|---|---|---|---|
| 01 | 11 | 25179 | 0.038 |
| 05 | 5 | 2010 | 0.098 |
| 07 | 3 | 1063 | 0.128 |
| 08 | 1 | 1041 | 0.048 |
| 09 | 2 | 7733 | 0.033 |
| 10 | 2 | 775 | 0.034 |
| 11 | 3 | 7352 | 0.048 |
| 14 | 4 | 3654 | 0.037 |
| 15 | 1 | 169 | 0.126 |
| 16 | 4 | 628 | 0.051 |
| 22 | 4 | 10339 | 0.078 |
| 23 | 1 | 10467 | 0.033 |
| 24 | 6 | 12751 | 0.060 |
| 28 | 2 | 9462 | 0.031 |
| 30 | 2 | 10555 | 0.032 |
| 31 | 16 | 13644 | 0.082 |

(continued)

| Route | Number services | Number of real trips | Average distance |
|---|---|---|---|
| 34 | 4 | 10138 | 0.038 |
| 36 | 2 | 4108 | 0.047 |
| 38 | 2 | 10510 | 0.031 |
| 39 | 4 | 5907 | 0.066 |
| 41 | 3 | 8999 | 0.048 |
| 61 | 11 | 3765 | 0.214 |
| 62 | 1 | 1148 | 0.058 |
| 63 | 4 | 6121 | 0.043 |
| 71 | 5 | 15705 | 0.047 |

Table 2 reports the evaluation of different options for trip ordering presented in Section 4. For each of the 4 options, it reports the average distance evaluated for the top 3 most intensive routes in the network. As table suggests, the best option is to adopt the second stop timestamp or the 1-N-off average as the reference time for real trips.

Table 2. Evaluation of different ordering options for three top routes

| | Route 1 | Route 31 | Route 71 |
|---|---|---|---|
| First stop | 0.044 | 0.086 | 0.049 |
| Second stop | 0.038 | 0.082 | 0.047 |
| Equal average | 0.048 | 0.085 | 0.048 |
| 1-N-off average | 0.038 | 0.083 | 0.047 |

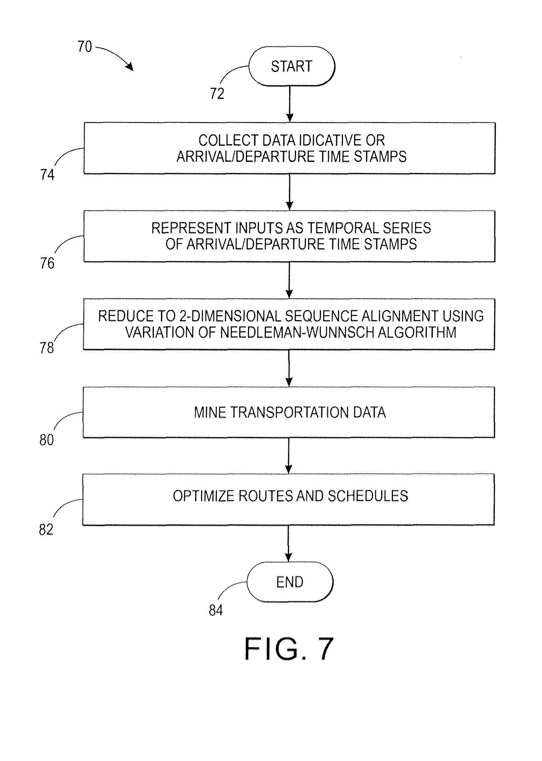

FIG. 7 illustrates a high-level flow chart outlining logical operational steps of a method 70 for temporal series alignment for matching real trip data to scheduling information in a public transportation system, in accordance with a preferred embodiment. As indicated at block 72, the process begins. Thereafter, as shown at block 74, data indicative of arrival and/or departure time stamps can be compiled/collected from a public transporation system. Next, as shown at block 76, inputs can be represented as temporal series of arrival/departure time stamps. Next, as shown at block 78, the temporal series data can be reduced to a two-dimensional sequence alignment using variations of the Needleman-Wunnsch algorithm, as described previously herein. Thereafter, as described at block 80, the resulting output (transportation) data can be mined and based on this information, routes and schedules can be optimized, as indicated at block 82. The process can then terminate, as shown at block 84.

As will be appreciated by one skilled in the art, the disclosed embodiments can be implemented as a method, data-processing system, or computer program product. Accordingly, the embodiments may take the form of an entire hardware implementation, an entire software embodiment or an embodiment combining software and hardware aspects all generally referred to as a "circuit" or "module." Furthermore, the disclosed approach may take the form of a computer program product on a computer-usable storage medium having computer-usable program code embodied in the medium. Any suitable computer readable medium may be utilized including hard disks, USB flash drives, DVDs, CD-ROMs, optical storage devices, magnetic storage devices, etc.

Computer program code for carrying out operations of the present invention may be written in an object oriented programming language (e.g., JAVA, C++, etc.). The computer program code, however, for carrying out operations of the present invention may also be written in conventional procedural programming languages such as the "C" programming language or in a visually oriented programming environment such as, for example, Visual Basic.

The program code may execute entirely on the user's computer or mobile device, partly on the user's computer, as a stand-alone software package, partly on the user's computer and partly on a remote computer or entirely on the remote computer. In the latter scenario, the remote computer may be connected to a user's computer through a local area network (LAN) or a wide area network (WAN), wireless data network e.g., WiFi, WiMax, 802.11x, and cellular network or the connection can be made to an external computer via most third party supported networks (e.g., through the Internet via an internet service provider).

The embodiments are described at least in part herein with reference to flowchart illustrations and/or block diagrams of methods, systems, and computer program products and data structures according to embodiments of the invention. It will be understood that each block of the illustrations, and combinations of blocks, can be implemented by computer program instructions. These computer program instructions may be provided to a processor of a general-purpose computer, special purpose computer, or other programmable data-processing apparatus to produce a machine such that the instructions, which execute via the processor of the computer or other programmable data-processing apparatus, create means for implementing the functions/acts specified in the block or blocks discussed herien such as, for example, the various instructions shown with respect to the method 70 illusttrated in FIG. 7.

These computer program instructions may also be stored in a computer-readable memory that can direct a computer or other programmable data-processing apparatus to function in a particular manner such that the instructions stored in the computer-readable memory produce an article of manufacture including instruction means which implement the function/act specified in the block or blocks.

The computer program instructions may also be loaded onto a computer or other programmable data-processing apparatus to cause a series of operational steps to be performed on the computer or other programmable apparatus to produce a computer implemented process such that the instructions which execute on the computer or other programmable apparatus provide steps for implementing the functions/acts specified in the block or blocks.

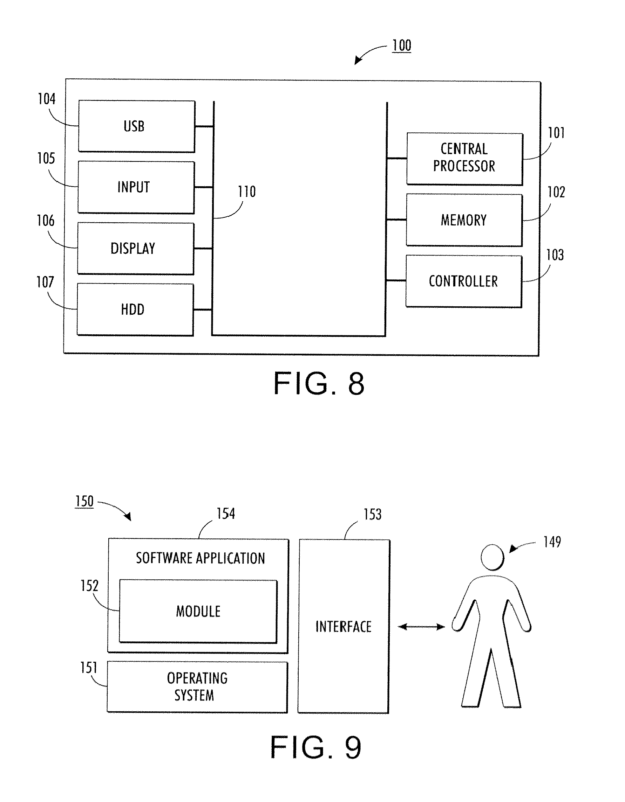

FIGS. 8-9 are provided as exemplary diagrams of data-processing environments in which embodiments of the present invention may be implemented. It should be appreciated that FIG. 8-9 are only exemplary and are not intended to assert or imply any limitation with regard to the environments in which aspects or embodiments of the disclosed embodiments may be implemented. Many modifications to the depicted environments may be made without departing from the spirit and scope of the disclosed embodiments.

As illustrated in FIG. 8, the disclosed embodiments may be implemented in the context of a data-processing system 100 that includes, for example, a central processor 101 (or other processors), a main memory 102, a controller 103, and in some embodiments, a USB (Universal Serial Bus) 104 or other appropriate peripheral connection. System 100 can also include an input device 105 (e.g., a keyboard pointing device such as a mouse, etc.), a display 106, and a HDD (Hard Disk Drive) 107 (e.g., mass storage). As illustrated, the various components of data-processing system 100 can communicate electronically through a system bus 110 or similar architecture. The system bus 110 may be, for example, a subsystem that transfers data between, for example, computer components within data-processing system 100 or to and from other data-processing devices, components, computers, etc.

FIG. 9 illustrates a computer software system 150, which may be employed for directing the operation of the data-processing system 100 depicted in FIG. 8. Software application 154, stored in memory 102 and/or on HDD 107, can generally include and/or can be associated with a kernel or operating system 151 and a shell or interface 153. One or more application programs, such as module(s) 152, may be "loaded" (i.e., transferred from mass storage or HDD 107 into the main memory 102) for execution by the data-processing system 100. In the example shown in FIG. 9, module 152 can be implemented as, for example, a software module that performs the logical instructions or operations of method 70 shown in FIG. 7 or other appropriate methods/processes.

The data-processing system 100 can receive user commands and data through user interface 153 accessible by a user 149. These inputs may then be acted upon by the data-processing system 100 in accordance with instructions from operating system 151 and/or software application 154 and any software module(s) 152 thereof.

The discussion herein is thus intended to provide a brief, general description of suitable computing environments in which the system and method may be implemented. Although not required, the disclosed embodiments will be described in the general context of computer-executable instructions such as program modules being executed by a single computer. In most instances, a "module" constitutes a software application.

Generally, program modules (e.g., module 152) can include, but are not limited to, routines, subroutines, software applications, programs, objects, components, data structures, etc., that perform particular tasks or implement particular abstract data types and instructions. Moreover, those skilled in the art will appreciate that the disclosed method and system may be practiced with other computer system configurations such as, for example, hand-held devices, multi-processor systems, data networks, microprocessor-based or programmable consumer electronics, networked personal computers, minicomputers, mainframe computers, servers, and the like.

Note that the term module as utilized herein may refer to a collection of routines and data structures that perform a particular task or implements a particular abstract data type. Modules may be composed of two parts: an interface, which lists the constants, data types, variable, and routines that can be accessed by other modules or routines, and an implementation, which is typically private (accessible only to that module) and which includes source code that actually implements the routines in the module. The term module may also simply refer to an application such as a computer program designed to assist in the performance of a specific task such as word processing, accounting, inventory management, etc.

The interface 153 (e.g., a grahical user interface) can serve to display results, whereupon a user may supply additional inputs or terminate a particular session. In some embodiments, operating system 151 and interface 153 can be implemented in the context of a "windows" system. It can be appreciated, of course, that other types of systems are possible. For example, rather than a traditional "windows" system, other operation systems such as, for example, a real time operating system (RTOS) more commonly employed in wireless systems may also be employed with respect to operating system 151 and interface 153. The software application 154 can include, for example, user proximity detection module 152, which can include instructions for carrying out steps or logical operations such as those shown in FIG. 7.

FIGS. 8-9 are thus intended as examples and not as architectural limitations of disclosed embodiments. Additionally, such embodiments are not limited to any particular application or computing or data-processing environment. Instead, those skilled in the art will appreciate that the disclosed approach may be advantageously applied to a variety of systems and application software. Moreover, the disclosed embodiments can be embodied on a variety of different computing platforms including Macintosh, Unix, Linux, and the like.

It will be appreciated that variations of the above-disclosed and other features and functions, or alternatives thereof, may be desirably combined into many other different systems or applications. Also, that various presently unforeseen or unanticipated alternatives, modifications, variations or improvements therein may be subsequently made by those skilled in the art which are also intended to be encompassed by the following claims.

## Claims

1. A system for matching real trips to schedules in a public transportation system, said system comprising:

   a processor;
   a data bus coupled to said processor; and
   a computer-usable medium embodying computer program code, said computer-usable medium being coupled to said data bus, said computer program code comprising instructions executable by said processor and configured for:

   reducing inputs to two-dimensional sequences of data indicative of a temporal series of arrival and departure timestamps;
   reducing a matching problem to an alignment of said two-dimensional sequences of data;
   applying a dynamic programming solution to said alignment of said two-dimensional sequences of data with respect to said matching problem; and
   analyzing at least one symmetric case and at least one asymmetric case with respect to said alignment of said two-dimensional sequences of data to thereby match real trip data to schedule data in said public transportation system based on said temporal series of said arrival and departure timestamps.

2. The system of claim 1, wherein said dynamic programming solution comprises an alignment algorithm.

3. The system of claim 2, wherein said instructions are further configured for ordering said temporal series of arrival and departure timestamps according to an associated reference time to obtain a sequence parameter for use with said alignment algorithm.

4. The system of any of the preceding claims, wherein said dynamic programming solution comprises a Needleman-Wunsch algorithm.

5. The system of any of the preceding claims, wherein said instructions for applying a dynamic programming solution to said alignment of said two-dimensional sequences of data are further configured for applying said dynamic programming solution to said alignment of said two-dimensional sequences of data when only a part of said alignment of said two-dimensional sequences of data is available.

6. The system of any of the preceding claims, wherein said instructions are further configured for analyzing different public transport services and service mismatches by accounting for common data between said different services and service mismatches in order to compare corresponding timestamps among said temporal series of arrival and departure timestamps and penalize segments thereof where services mismatch.

7. A processor-readable medium storing computer code representing instructions to cause a process for matching real trips to schedules in a public transportation system, said computer code comprising code to:

   reduce inputs to two-dimensional sequences of data indicative of a temporal series of arrival and departure timestamps;

reduce a matching problem to an alignment of said two-dimensional sequences of data;

apply a dynamic programming solution to said alignment of said two-dimensional sequences of data with respect to said matching problem; and

analyze at least one symmetric case and at least one asymmetric case with respect to said alignment of said two-dimensional sequences of data to thereby match real trip data to schedule data in said public transportation system based on said temporal series of said arrival and departure timestamps.

8. The processor-readable medium of claim 7, wherein said dynamic programming solution comprises an alignment algorithm.

9. The processor-readable medium of claim 8, wherein said code further comprises code to order said temporal series of arrival and departure timestamps according to an associated reference time to obtain a sequence parameter for use with said alignment algorithm.

10. The processor-readable medium of any of claims 7 to 9, wherein said dynamic programming solution comprises a Needleman-Wunsch algorithm.

11. The processor-readable medium of any of claims 7 to 10, wherein said code to apply a dynamic programming solution to said alignment of said two-dimensional sequences of data, further comprises code to apply said dynamic programming solution to said alignment of said two-dimensional sequences of data when only a part of said alignment of said two-dimensional sequences of data is available.

12. The processor-readable medium of any of claims 7 to 11, wherein said code further comprises code to analyze different public transport services and service mismatches by accounting for common data between said different services and service mismatches in order to compare corresponding timestamps among said temporal series of arrival and departure timestamps and penalize segments thereof where services mismatch.

13. A method for matching real trips to schedules in a public transportation system, said method comprising:

reducing inputs to two-dimensional sequences of data indicative of a temporal series of arrival and departure timestamps;

reducing a matching problem to an alignment of said two-dimensional sequences of data;

applying a dynamic programming solution to said alignment of said two-dimensional sequences of data with respect to said matching problem; and

analyzing at least one symmetric case and at least one asymmetric case with respect to said alignment of said two-dimensional sequences of data to thereby match real trip data to schedule data in said public transportation system based on said temporal series of said arrival and departure timestamps.

FIG. 1

FIG. 2

30

FIG. 3

40

```
0.282  0.199  0.115  0.033  0.050  0.133  0.216  0.299  0.382  0.455  0.539  0.622
0.227  0.144  0.061  0.021  0.104  0.187  0.271  0.353  0.437  0.510  0.593  0.677
0.317  0.234  0.150  0.068  0.015  0.098  0.181  0.264  0.347  0.420  0.504  0.587
0.779  0.696  0.612  0.530  0.447  0.363  0.280  0.197  0.114  0.041  0.042  0.125
0.696  0.613  0.529  0.447  0.364  0.280  0.197  0.114  0.031  0.041  0.125  0.208
0.731  0.648  0.565  0.482  0.399  0.316  0.232  0.150  0.067  0.006  0.089  0.173
1.119  1.036  0.952  0.870  0.786  0.703  0.620  0.537  0.454  0.381  0.297  0.214
1.212  1.128  1.045  0.963  0.879  0.796  0.713  0.630  0.547  0.474  0.390  0.307
1.278  1.194  1.111  1.029  0.945  0.862  0.779  0.696  0.613  0.540  0.456  0.373
```

FIG. 4

```
0 0 0 0 0 0 0 0 0 0 0 0 0
0 1 1 1 1 2 2 2 2 2 2 2 2
0 1 1 1 1 2 2 2 2 2 2 2 2
0 3 3 1 1 1 2 2 2 2 2 2 2
0 3 3 3 1 1 1 1 1 1 1 2 2
0 3 3 3 1 1 1 1 1 1 1 2 2
0 3 3 3 3 1 1 1 1 1 1 2 2
0 3 3 3 3 3 3 1 1 1 1 1 1
0 3 3 3 3 3 3 3 1 1 1 1 1
0 3 3 3 3 3 3 3 3 1 1 1 1
```

50

## FIG. 5

FIG. 6

EP 2 782 053 A1

START

72

COLLECT DATA IDICATIVE OR
ARRIVAL/DEPARTURE TIME STAMPS

74

REPRESENT INPUTS AS TEMPORAL SERIES
OF ARRIVAL/DEPARTURE TIME STAMPS

76

REDUCE TO 2-DIMENSIONAL SEQUENCE ALIGNMENT USING
VARIATION OF NEEDLEMAN-WUNNSCH ALGORITHM

78

MINE TRANSPORTATION DATA

80

OPTIMIZE ROUTES AND SCHEDULES

82

END

84

FIG. 7

100

USB 104

INPUT 105

DISPLAY 106

HDD 107

110

CENTRAL PROCESSOR 101

MEMORY 102

CONTROLLER 103

FIG. 8

150

SOFTWARE APPLICATION 154

MODULE 152

INTERFACE 153

149

OPERATING SYSTEM 151

FIG. 9

Europäisches
Patentamt

European
Patent Office

Office européen
des brevets

**EUROPEAN SEARCH REPORT**

Application Number

EP 14 15 9572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art. 52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * | 1-13 | INV. G06Q10/04 G06Q50/30 TECHNICAL FIELDS SEARCHED (IPC) G06Q |

The present search report has been drawn up for all claims

| Place of search | Date of completion of the search | Examiner |
|---|---|---|
| The Hague | 9 May 2014 | Bassanini, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 14 15 9572

## DOCUMENTS CONSIDERED TO BE RELEVANT

| Category | Citation of document with indication, where appropriate, of relevant passages | Relevant to claim | CLASSIFICATION OF THE APPLICATION   (IPC) |
|---|---|---|---|
| | - - - - - | | |

TECHNICAL FIELDS
SEARCHED      (IPC)

The present search report has been drawn up for all claims

| Place of search | Date of completion of the search | Examiner |
|---|---|---|
| The Hague | 9 May 2014 | Bassanini, Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................

& : member of the same patent family, corresponding
    document

EPO FORM 1503 03.82 (P04C01)